# EUROPEAN PATENT APPLICATION

(11) **EP 4 670 806 A1**
(43) Date of publication of application: **31.12.2025**
(21) Application number: 25185096.2
(22) Date of filing: 25.06.2025
(51) Int. Cl.: A63F 13/216, A63F 13/323, A63F 13/327, A63F 13/73, A63F 13/79

(54) **PROXIMITY-BASED TEMPORARY GAMER PROFILE ACCESS**

(30) Priority: 27.06.2024 US 202418757005
(71) Applicant: Microsoft Technology Licensing, LLC, Redmond, WA 98052 (US)
(72) Inventor: PATANA, Tero Juhani, Redmond, Washington, 98052 (US); CHUANG, Eric, Redmond, Washington, 98052 (US); WANG, Shuoqi Scott, Redmond, Washington, 98052 (US)
(74) Representative: CMS Cameron McKenna Nabarro Olswang LLP

(57) **Abstract**

Technology is disclosed for expedited gamer profile log in to a gaming console based on a proof-of-presence of the owner of the gaming profile to the console. The user may request proximity-based login via a gaming application on a mobile device into which the user is logged in and authenticated by a central service. The mobile device sends the request to the central service along with location evidence. The user authorizes the proximity-based login on the console, which provides location evidence to the central service. The central service compares the mobile device location to the console location to pair the requests and authorizes the proximity-based login of the gamer profile on the console when the locations match. When mobile device location evidence no longer matches the console location evidence, the mobile device loses its proof-of-presence, and the central service automatically logs the gamer profile out of the console.

## Description

### TECHNICAL FIELD

Aspects of the disclosure are related to the field of computing software and hardware and, in particular, to proximity-based temporary profile access.

### BACKGROUND

The gaming industry has evolved over time from basic consoles that execute games stored on mobile media (e.g., compact disks) that are inserted into the console to fully online experiences. The online experiences support, and often require, gamer profiles. The gamer profiles, much like any user account, allow login and access to cloud-hosted services, which include online games, game sharing, messaging, achievements, and so forth. One of the challenges when playing games away from your personal console is accessing your gamer profile. For example, friends often meet at one's home to play together on the console of the hosting friend. However, the guests may need or want to log in to their gamer profiles on the console. For example, if the hosting friend does not own the desired game, the guest can enable gameplay if the guest owns the game by logging in to their gamer profile. The process for guest login is tedious because it often requires the user to log in to their gamer profile on the friend's console and perform initial setup. Further, when leaving, users often forget to log out of their friend's console and/or login artifacts may be left behind, which may be a security concern. For example, the gamer profile may then continue to be used on that console, with full access to the gamer profile, due to the login artifacts, the continued login, or both. Accordingly, improvements are needed.

### OVERVIEW

Technology is disclosed herein for enabling temporary, proximity-based profile access. Much of this disclosure is described with reference to a gaming system and gamer profile, though the technology described may be enabled for any type of profile access, particularly with a special purpose device such as a gaming console, a smart television, or the like. In various embodiments, a user may wish to log in to their profile at a remote location (e.g., a friend's house, a vacation rental, or the like). The user may be authenticated (e.g., logged in) to an application on the user's mobile device (e.g., smartphone). The central service, which may be a cloud-based service, may be responsible for allowing profile access, e.g., by authenticating the profiles on various devices. For example, the user may be logged in to their gaming profile through a gaming application on their smartphone, and the central service may have authenticated the user's login. The user may request a proximity-based log in to a gaming console via the mobile device application. On the gaming console, the user or the owner of the console may indicate that proximity-based logins are allowed. The central service may receive the mobile device request, which may include a location indication of the mobile device. The central service may further receive the console indication, which may include a location indication of the console. The central service may correlate the requests and, based on the locations of the console and the mobile device, and/or based on other proof-of-presence of the mobile device with relation to the console, determine the mobile device is proximate to the console. In response, the central service may authorize a proximity-based login of the user's profile on the console. If the central service determines the mobile device has lost proof-of-presence, the central service logs the user's profile out of the console.

More specifically, a system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions. One general aspect includes a computer-implemented method for proximity-based log in and log out. The method includes receiving, by a central service via an application on a mobile computing device, a first authorization indication to log a gamer profile in to a gaming console. The gamer profile is logged in to the application and authenticated by the central service, and the first authorization indication includes a first location indication of a physical location of the mobile computing device. The method also includes receiving, by the central service from the gaming console, a second authorization indication for a proximity-based login, where the second authorization indication includes a second location indication of a physical location of the gaming console. The method further includes pairing, by the central service, the first authorization indication and the second authorization indication in response to determining proof-of-presence of the mobile computing device with the gaming console based on the first location indication and the second location indication exceeding a pairing threshold. In other words, the proof-of-presence indicates that the mobile computing device is near (e.g., in the same room, the same building, within fifty feet, or the like) the gaming console. In response to pairing, the central service may authorize the proximity-based login. Authorizing the proximity-based login may include logging, by the central service, the gamer profile in to the gaming console. In response to determining loss of the proof-of-presence, the central service may deauthorize the proximity-based login. Deauthorizing the proximity-based login may include logging, by the central service, the gamer profile out of the gaming console. Other embodiments of this aspect include corresponding computer systems, apparatus, and computer programs recorded on one or more computer storage devices, each configured to perform the actions of the methods.

Implementations may include one or more of the following features. The computer-implemented method may further include receiving, by the central service from the mobile computing device and the gaming console, continued respective location indications. In such cases, determining the loss of the proof-of-presence may include determining the continued respective location indications fall below a matching threshold. In some embodiments, the matching threshold may be different than the pairing threshold.

In some embodiments, the continued respective location indications may include a different type of location indication than the first and second location indications. For example, a QR code may be used to indicate proof-of-presence for the initial location indication, but subsequent location indications may be provided without user interaction including by providing signal indications from the respective devices (e.g., the mobile device and the console) or from other devices (e.g., wireless access points, other internet of things (IoT) devices, and the like).

In some embodiments, the continued respective location indications are received in response to periodic polling from the central service. The continued respective location indications are received in response to the request.

In some embodiments, the central service may provide, to the gaming console, access to limited data associated with the gamer profile based on the proximity-based login. For example, the full gamer profile data may not be available including data such as messages, historical games played, and the like.

In some embodiments, the first location indication includes a first wireless scan signature. The first wireless scan signature may include names and signal strengths of wireless access points available to the mobile computing device. In such embodiments, the second location indication may include a second wireless scan signature. The second wireless scan signature may include names and signal strengths of wireless access points available to the gaming console.

In some embodiments, the first location indication includes a first scan signature. The first scan signature may include names of one or more internet-of-things (IoT) devices emitting signals that are detected by the mobile computing device. In such embodiments, the second location indication may include a second scan signature. The second scan signature may include names of one or more IoT devices emitting signals that are detected by the gaming console.

In some embodiments, the first location indication and the second location indication each include an indication of a connection to a wireless network, a quick-response (QR) code, a sound signature, a global positioning system (GPS) location indication, or a combination thereof.

In some embodiments, deauthorizing the proximity-based login may further include transmitting, from the central service to the gaming console, instructions to delete all data related to the gamer profile associated with the proximity-based login. Implementations of the described techniques may include hardware, a method or process, or computer software on a computer-accessible medium.

This Overview is provided to introduce a selection of concepts in a simplified form that are further described below in the Detailed Description. It may be understood that this Overview is not intended to identify key features or essential features of the claimed subject matter, nor is it intended to be used to limit the scope of the claimed subject matter.

### BRIEF DESCRIPTION OF THE DRAWINGS

Many aspects of the disclosure may be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
FIG. 1 illustrates a system at time T1 initiating a proximity-based login, according to various embodiments.
FIG. 2 illustrates the system of FIG. 1 at time T2 authorizing the proximity-based login, according to various embodiments.
FIG. 3 illustrates the system of FIG. 1 at time T3 deauthorizing the proximity-based login, according to various embodiments.
FIG. 4 illustrates additional detail of a central service that authorizes and deauthorizes proximity-based logins, according to various embodiments.
FIG. 5 illustrates a method of authorizing and deauthorizing proximity-based logins, according to various embodiments.
FIG. 6 illustrates a mobile computing device having an application that is used for proximity-based logins, according to various embodiments.
FIG. 7 illustrates a method of requesting and regulating a proximity-based login, according to various embodiments.
FIG. 8A illustrates an operational scenario depicting initiating and regulating a proximity-based login, according to various embodiments.
FIG. 8B illustrates another operational scenario depicting initiating and regulating a proximity-based login, according to various embodiments.
FIG. 9 illustrates a computing system suitable for implementing the various operational environments, architectures, processes, scenarios, and sequences discussed below with respect to the other Figures.

### DETAILED DESCRIPTION

Various implementations are disclosed herein for initiating, regulating, and ending proximity-based logins. As discussed above, the task of logging in to devices (e.g., gaming consoles) temporarily can be tedious and require unnecessary setup for temporary access. For example, when gaming at a friend's house, at a vacation rental, or the like, the user often logs in to their own account for gaming, video watching, and the like. However, when logging in to a device for temporary access, often the user forgets to log out. The present disclosure describes systems and methods for securely logging in to a device with a profile temporarily based on proving or providing evidence of proximity (i.e., proof-of-presence) to the device. When the proof-of-presence is lost, the profile is automatically logged out. In some embodiments, in addition to logging out the profile, residual login artifacts (e.g., account name, user settings or customizations, user preferences, and the like), other profile data (e.g., downloaded games or other information), and the like may be deleted from the console. In some embodiments, whether and which login artifacts and other profile data are deleted may be configured by the central service, user-configurable, or a combination. While described with respect to gaming, other systems may implement the described technology without departing from the spirit and scope of the present disclosure.

In many systems, user authentication and access to services are provided by cloud-based hosting services, referred to herein as a central service. The central service is typically responsible for authenticating users, maintaining profile information for users, administrating access to the user profiles as well as what the users may access based on their user profile. For example, various users may purchase differing levels of service, and the central service may regulate access to content based on the user profile.

With respect to a gaming environment, the central service may regulate which games the users may access based on purchases made through their gaming profile. Further, the central service may regulate authentication of gaming profiles on consoles and gaming applications. Other controls managed by the central service may include saving achievements and progress in games, messaging between players, and the like.

The disclosed system provides for the central service authorizing and deauthorizing log in of gaming profiles on consoles based on proof-of-presence determinations that confirm the user (or at least the user's mobile device) is located near the console. The user may log in to a gaming application on their mobile device, which contacts the central service for authentication. When the user would like to log in to a console, the user may indicate so using the application on the mobile device. The mobile device transmits the request to the central service along with location evidence for the mobile device. The user or someone logged in to the console may also request the login on the console, which transmits console location evidence to the central service along with the request. The central service can pair the requests and, if the location evidence matches sufficiently, authorize the login (i.e., proximity-based login). Based on future submissions of location evidence from the console and the mobile device (e.g., based on periodic polling or a triggering event), the mobile device may lose proof-of-presence. Upon loss of the proof-of-presence, the central service logs the gaming profile out of the console.

Advantageously, the disclosed system provides a secure, efficient, temporary proximity-based login. Various embodiments improve security of user profiles by automatically logging the user out of the temporarily needed device based on a behind-the-scenes confirmation that the associated mobile device is no longer in the vicinity of the device. Further, memory and resource usage are reduced by expediting the login process using the authentication previously obtained by the user via the mobile device application.

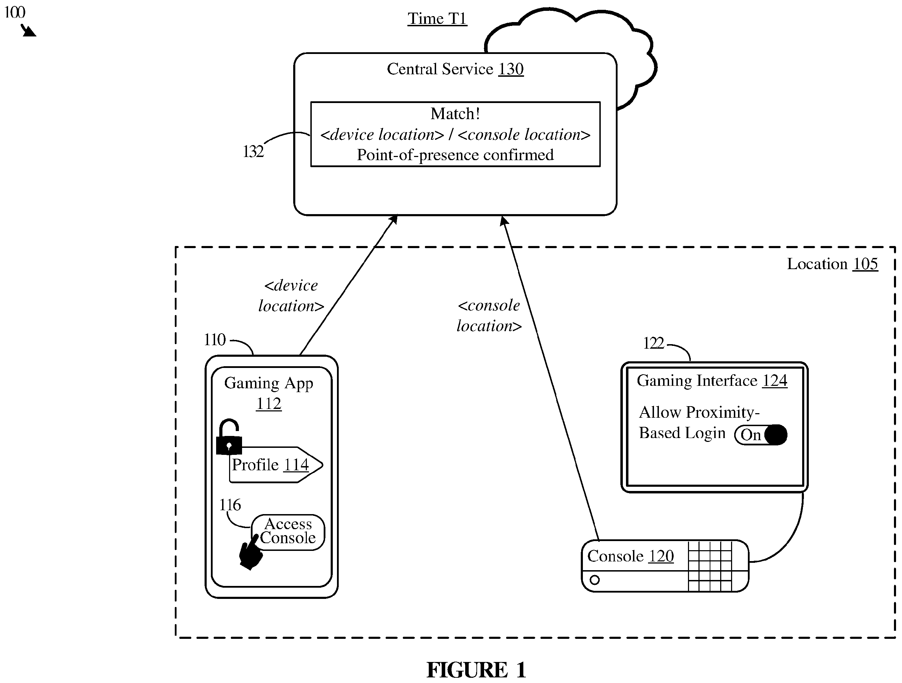

Turning now to the figures, FIG. 1 illustrates a system 100 at time T1. System 100 includes mobile device 110, console 120, and central service 130. Mobile device 110 and console 120 are both in location 105 at time T1. At time T1, the user's gamer profile, profile 114, is not logged in to console 120.

Mobile device 110 may be any suitable mobile device including a smartphone, tablet, laptop computer, or the like. Computing system 901 may be generally representative of mobile device 110. Mobile device 110 may be owned by a user that has installed gaming app 112 and logged in to his gamer profile, profile 114, through gaming app 112. Mobile device 110 includes componentry for determining or providing location evidence (i.e., location information) to central service 130 as described in further detail herein. For example, mobile device 110 may include a camera capable of scanning a QR code, componentry capable of scanning for wireless networks, componentry capable of scanning for IoT devices, componentry capable of detecting a sound signature, or the like.

Gaming app 112 may be a software application that provides an interface into the gaming functionality provided by central service 130. Gaming app 112 may have many features not discussed herein for the sake of brevity including, for example, game configurations, and the like. Gaming app 112 may allow the user to log in with a gaming profile using, for example, a username and password, which central service 130 authenticates. As shown in FIG. 1, the user has logged in using profile 114. Once logged in, the user may access details of profile 114 stored and managed by central service 130. Further, once logged in, the user may request the central service 130 log profile 114 in to a console using access console button 116. In some embodiments, the access console button 116 may only be available if a console (e.g., console 120) is detected nearby. In some embodiments, clicking or otherwise selecting access console button 116 may open a graphical user interface that requests further information including the name or other information identifying console 120, allows the user to capture a QR code displayed on display 122 of console 120, detects nearby consoles and provides a selectable list, or the like. Once the user submits the request to access console 120, mobile device 110 transmits the request along with location evidence of mobile device 110 (depicted as *<device location>* in FIG. 1). The location evidence is also referred to herein as an indication of the location of mobile device 110.

The location evidence provided by mobile device 110 may include any type of location evidence. For example, if the user is logged into a wireless network, the wireless network information (e.g., name, identifier, or the like) may be used as location evidence. As another example, console 120 may provide some information that mobile device 110 may access and transmit to central service 110 as evidence mobile device 110 is in the same location as console 120. One example of the information may be a quick-read (QR) code that mobile device 110 can scan that console 120 displays on display device 122. The QR code may be unique for each instance of proof-of-presence, such that for multiple user logins a different QR code will be used for each one. Another example of the information may be a sound signature that mobile device 110 can receive or detect and transmit to central service 130 or extract information from to send to central service 130. As another example, the location evidence may include a wireless scan signature that includes the names and signal strengths of wireless access points available to mobile device 110. As another example, the location evidence may include a scan signature that includes names and signal strengths of other Internet of Things (IoT) devices that are available to mobile device 110. As yet another example, the location evidence may include global positioning service (GPS) coordinates of mobile device 110. As yet another example, the location evidence may include Radio Frequency Identification (RFID). For example, console 120 may include an RFID tag (e.g., an embedded tag), and mobile device 110 may include an RFID reader so that when proximate to console 120, mobile device 110 can read the RFID tag and provide the information as location evidence. In the best-case scenario, the location evidence may be difficult to spoof. For example, a wireless signature scan is difficult to spoof, but a code displayed on display 122 may be easy to provide remotely, therefore spoofing the location. In some embodiments, multiple types of location evidence may be used, for example, to limit the ability of users to falsify location evidence.

Console 120 may be any special purpose device. Using the gaming context, console 120 may be any gaming console including, for example, MICROSOFT XBOX, SONY PLAYSTATION, NINTENDO WII, NINTENDO SWITCH, or the like. Console 120 may include display 122, which may be integrated into console 120 or connected via a cable or wirelessly. Display device 122 may display a graphical user interface 124 provided from console 120 indicating gaming information, providing visual gameplay, and the like. Graphical user interface 124 may include an option for turning on proximity-based logins as shown in FIG. 1. In some embodiments, this may be an option that can be turned on and off. In some embodiments, rather than the toggle shown in FIG. 1, a button for initiating a proximity-based login may be available for selection. In some cases, rather than initiating the request from console 120 and mobile device 110, mobile device 110 may include information identifying console 120 (e.g., an identifier) that central service 130 may use to determine whether console 120 allows proximity-based logins and request location evidence from console 130. Whether console 120 transmits a request to central service 130 or responds to a request from central service 130 originally initiated from mobile device 110, console 120 provides location evidence to central service 130 (depicted as *<console location>* in FIG. 1). The location evidence is also referred to herein as an indication of the location of console 120.

The location evidence provided from console 120 for initiating the proximity-based login will include the same type of location evidence provided by mobile device 110 to ensure that the devices are co-located. For example, if a QR code is scanned by mobile device 110, console 120 also provides the QR code. As another example, a wireless scan signature of wireless access points or a scan signature of other IoT devices may be used such that both mobile device 110 and console 120 each provide a scan.

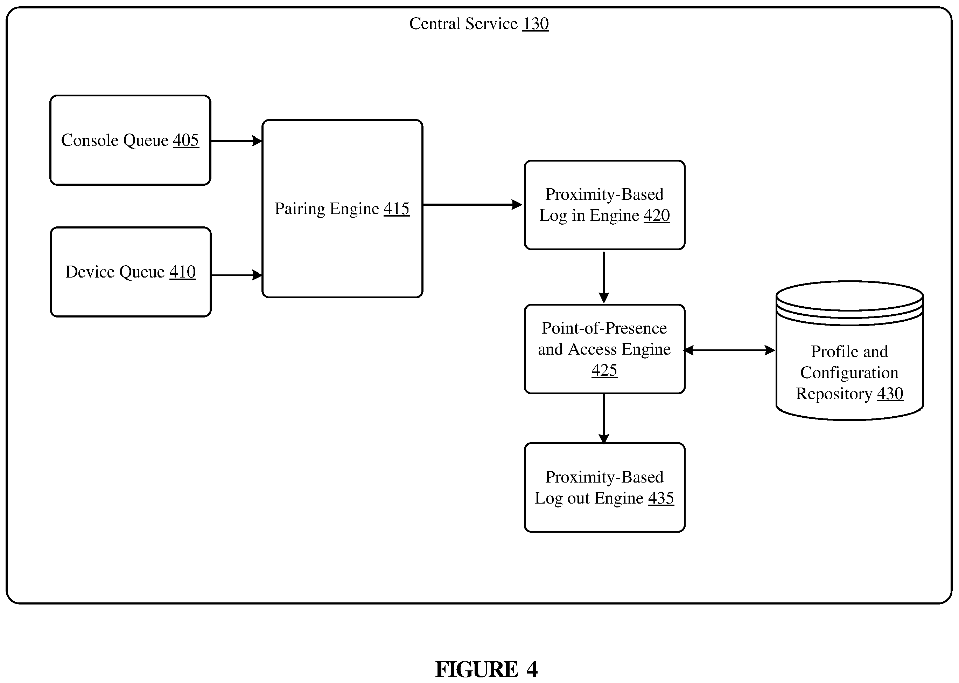

Central service 130 may be a cloud-based service that manages the gaming services the user of mobile device 110 uses. Central service 130 may be hosted on one or more servers of which computing system 901 may be generally representative. Central service 130 may authenticate profile 114 via gaming app 112 when the user logs in. Upon authenticating profile 114, the user may access data associated with profile 114 from central service 130 via gaming app 112. Additional details of central service 130 are described in further detail with respect to FIG. 4.

Central service 130 may identify matching requests to pair based on matching the location evidence. As shown in FIG. 1, match 132 is determined between mobile device 110 and console 120 based on matching location evidence since they are both within location 105. In some cases, central service 130 may identify matching requests based on one or both of the requests providing an indication of the corresponding device for pairing. For example, the user may be able to select or provide the name or an identifier of console 120 via gaming app 112 on mobile device 110. Similarly, console 120 may be able to select or provide the name or identifier of the requesting mobile device 110 or gaming app 112. Alternatively, console 120 may be able to provide the gamer profile identifier (e.g., profile 114). Once central service 130 identifies the corresponding requests, it pairs the requests and makes a proof-of-presence determination based on the location evidence. The proof-of-presence determination (e.g., match 132) is based on the location evidence provided by mobile device 110 and console 120. If the location evidence exceeds a matching threshold, the proof-of-presence is established (i.e., validated). For example, when the QR code from mobile device 110 matches the QR code from console 120 or if both devices are logged in to the same wireless network, central service 130 may determine proof-of-presence is validated. As other examples, if the wireless scan signature or scan signature of other IoT devices exceed a pairing threshold (e.g., all the same names and similar signal strengths, ninety percent name match and similar signal strengths for those that match, or the like), if the sound signature from both mobile device 110 and console 120 exceed a pairing threshold, and the like, central service 130 may determine proof-of-presence is validated. Upon validating proof-of-presence, central service 130 may log profile 114 in to console 120.

The size of location 105 may be determined based on the pairing threshold. For example, the lower the pairing threshold, the larger location 105 may be. As the pairing threshold for, for example, a wireless scan signature or a scan signature of other IoT devices becomes smaller, the closer the data must be to achieve a match, and accordingly, the closer mobile device 110 must be to console 120 to achieve a match.

In some embodiments, profile 114 may be logged in to console 120 as a limited log in. For example, central service 130 may make limited data associated with profile 114 available to console 120. In some embodiments, the limitations may be configurable. For example, limitations may include limiting the available games for downloading, limiting or restricting access to messages to and from other players, limiting or restricting access to achievements and saved progress in games not available on console 120, or the like.

In use, at time T1, mobile device 110 may enter location 105 and request proximity-based login to console 120 by selecting access console button 116. The user is already logged in to gaming app 112 using profile 114, which was authenticated by central service 130. Upon selecting the access console button 116, mobile device sends the location evidence (i.e., <device location>) to central service 130. Meanwhile, the user may also ensure that console 120 allows proximity-based logins or initiates a proximity-based login request on console 120. Console 120 issues location evidence (i.e., <console location) to central service 130. Central service 130 identifies console 120 and mobile device 110 as corresponding for the proximity-based request (i.e., pairs them) and initiates a proof-of-presence (POP) determination process. Based on determining the location evidence from mobile device 110 and console 120 match or exceed a pairing threshold, central service 130 validates (i.e., confirms) the proof-of-presence shown by match 132.

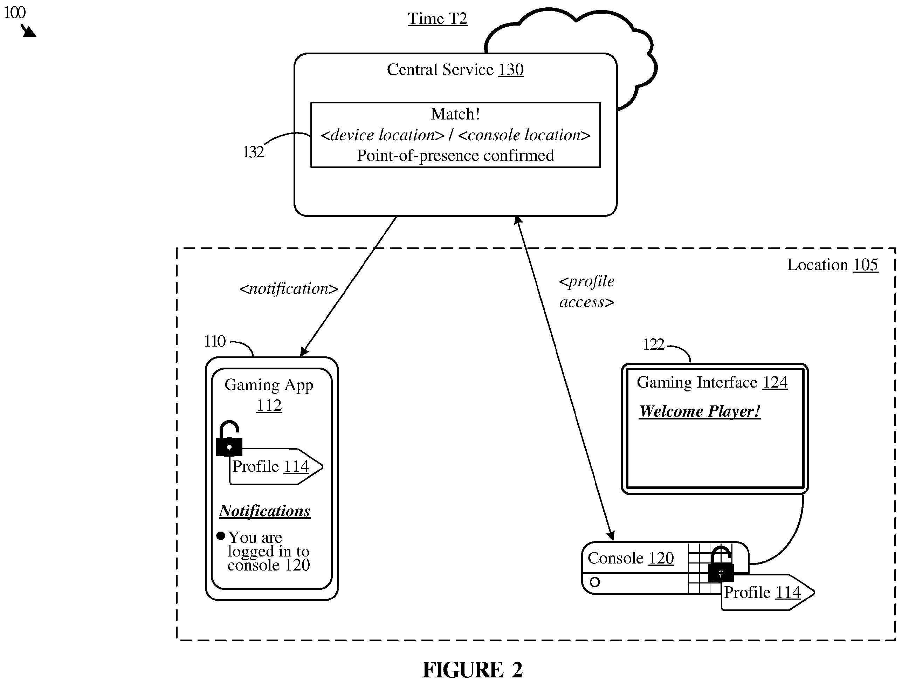

**FIG. 2** illustrates system 100 at time T2. Upon validating the proof-of-presence at time T1, central service 130 authorizes the proximity-based login of profile 114 on console 120. Note that the authorization is based in part on the user having formally authenticated profile 114 by central service 130 in gaming app 112.

Central service 130 authorizes the proximity-based login, which initiates activities including logging profile 114 in to console 120. As shown in FIG. 2, gaming interface 124 may indicate a welcome message or other indication that profile 114 is now logged in to console 120, which therefore has access to the data within profile 114.

As discussed above, in some embodiments, profile 114 may be logged in to console 120 as a limited log in due to the proximity-based login features. For example, the user may select limited data that central service 130 may make available to any console 120 that profile 114 is logged into as a proximity-based login. Limitations may include the type of data available, the games available, whether data may be downloaded and stored locally, and the like. In some embodiments, the configuration of the limited access may be system based rather than user configurable. In some embodiments, there may be no limits such that a proximity-based login behaves the same as if the user logged in to console 120 with profile 114 by entering the username and password or any other standard method.

Once central service 130 authorizes the proximity-based login and logs profile 114 in to console 120, central service 130 may transmit a notification to gaming app 112 indicating the proximity-based login was approved and profile 114 is now logged in to console 120. As shown in FIG. 2, gaming app 112 may display the notification.

During time T2, mobile device 110 remains in location 105 with console 120. Central service may perform subsequent proof-of-presence determinations to ensure match 132 remains. The subsequent proof-of-presence determinations may use a different type of location evidence than that used for the initial pairing and establishing proof-of-presence. For example, while a QR code scan is convenient for initiating the proximity-based login, interrupting gameplay and requiring confirmation in that way may be disruptive. Accordingly, subsequent proof-of-presence determinations may be made based on other types of location evidence. For example, the location evidence may be a wireless scan signature or scan signature of other IoT devices, which can be obtained in the background automatically without interrupting gameplay.

In some embodiments, subsequent proof-of-presence determinations are performed periodically based on central service 130 periodically polling mobile device 110 and console 120 for current location evidence. In some embodiments, proof-of-presence determinations may be triggered by, for example, mobile device 110 monitoring its location and if it senses movement (e.g., using motion sensors, based on GPS data changing, or the like), mobile device 110 may send a trigger notification to central service 130 to indicate a proof-of-presence determination should be initiated.

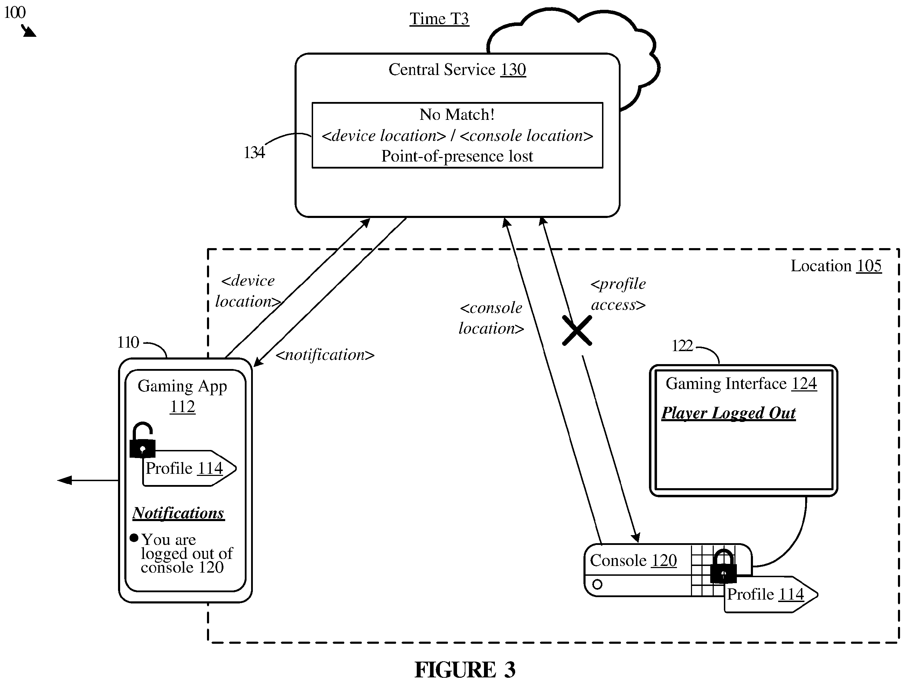

**FIG. 3** illustrates system 100 at time T3. At time T3, mobile device 110 leaves location 105. As discussed previously, mobile device 110 movement may cause gaming app 112 to trigger a proof-of-presence determination by central service 130. In other embodiments, central service 130 may periodically perform proof-of-presence determinations. To perform the proof-of-presence determination, central service 130 obtains current location evidence from console 120 and mobile device 110. If the location information does not match, mobile device 110 loses proof-of-presence as shown by no match 134.

Once mobile device 110 loses proof-of-presence, central service 130 deauthorizes the proximity-based login. Deauthorizing the proximity-based login includes automatically logging profile 114 out of console 120. As shown in FIG. 3, console 120 no longer has profile access to profile 114. In some embodiments, central service 130 may further instruct console 120 to delete data associated with profile 114. For example, data associated with the profile may include other profile data (e.g., downloaded games or data or the like), login artifacts (e.g., account name, user settings or customizations, user preferences, and the like), or the like. Whether central service 130 instructs console 120 to delete the data and which data to delete may be configured by central service 130, user-configurable, or a combination. Gaming interface 124 may display a notification that profile 114 was logged out. Upon logging profile 114 out of console 120, central service 130 may send a notification to gaming app 112, which may display the notification.

While FIG. 3 shows that mobile device 110 leaves location 105, if the user logs profile 114 out of gaming app 112, mobile device 110 loses proof-of-presence because central service 130 cannot obtain location evidence of mobile device 110 once profile 114 is logged out. Further, if mobile device 110 fails to respond due to loss of service or some other interference, mobile device 110 will lose proof-of-presence.

**FIG. 4** illustrates additional detail of functionality provided by central service 130. Central service 130 includes console queue 405, device queue 410, pairing engine 415, proximity-based log in engine 420, point-of-presence access engine 425, profile and configuration repository 430, and proximity-based log out engine 435. While shown with specific engines and modules, central service 130 may implement the described functionality with more or fewer modules and engines without departing from the scope and spirit of the present disclosure.

Console queue 405 is a queue of requests from consoles (e.g., console 120) for initiating proximity-based logins. For example, the user may request proximity-based logins on console 120, which may issue a request stored in console queue 405. In some embodiments, console queue 405 stores the console location information based on the request.

Device queue 410 is a queue of requests from mobile devices (e.g., mobile device 110) for initiating proximity-based logins. For example, the user may request a proximity-based login using access console button 116. Device queue 410 may store location information for the mobile devices based on the requests.

Pairing engine 415 obtains requests from console queue 405 and device queue 410 and pairs the requests. For example, the mobile device and corresponding console may be identified based on one or both of them providing an identifier for the corresponding device (e.g., the mobile device provides a console identifier and/or vice versa). In some embodiments, the location information provided by each may be used to identify and pair the corresponding console or mobile device. Once the pair is identified, pairing engine 415 performs an initial proof-of-presence validation to ensure that the mobile device is co-located with the corresponding console that the user is trying to log in to using the proximity-based login. Once pairing engine 415 validates the proof-of-presence, pairing engine 415 authorizes the proximity-based login.

Once pairing engine 415 authorizes the proximity-based login, proximity-based login engine 420 logs the profile in to the console. The log in process leverages the prior authentication of the profile on the gaming app 112 and the proof-of-presence to authenticate the profile on the console. Accordingly, the proximity-based login ties the profile authentication of the gaming app on the mobile device and the location of the mobile device to the console such that if any portion of the link breaks, the authentication of the profile on the console is revoked. In other words, if the user logs out of the gaming app, if the mobile device is in a different location, or proof-of-presence can otherwise not be validated, the proximity-based login is deauthorized.

While the proximity-based login is authorized, point-of-presence and access engine 425 provides the console with access to the profile data. Profile and configuration data repository 430 may include the profile data as well as any configuration information that limits the available data based on the proximity-based login. For example, certain data may be limited or completely restricted when the user is logged in to a console with a proximity-based login. Further, point-of-presence and access engine 425 may perform subsequent proof-of-presence determinations. For example, point-of-presence and access engine 425 may periodically poll the console and mobile device for location information and validate proof-of-presence based on the responses. In other embodiments, a triggering event may cause point-of-presence and access engine 425 to perform a proof-of-presence determination. For example, the gaming app on the mobile device may monitor the location of the mobile device and, if it detects that the location has changed, may send a trigger notification to point-of-presence and access engine 425 to perform the determination. Other triggering events may include the user logging out of any device, a lost connection between the console and the central service 130, and the like. Once proof-of-presence is lost, point-of-presence and access engine 425 deauthorizes the proximity-based login.

Once the proximity-based login is deauthorized, proximity-based log out engine 435 logs the profile out of the console. In some embodiments, further steps are taken to delete all data associated with the profile from the console. Varying degrees of removing data may be used based on configuration settings, in some embodiments. For example, a user may know that they will return every weekend to play at their friend's house, so may limit the data removal such that the proximity-based login may be easily performed next time. In such embodiments, cookies or other data may be left such that when the user re-enters the location, the gaming app or the console may automatically trigger the proximity-based login again without user input.

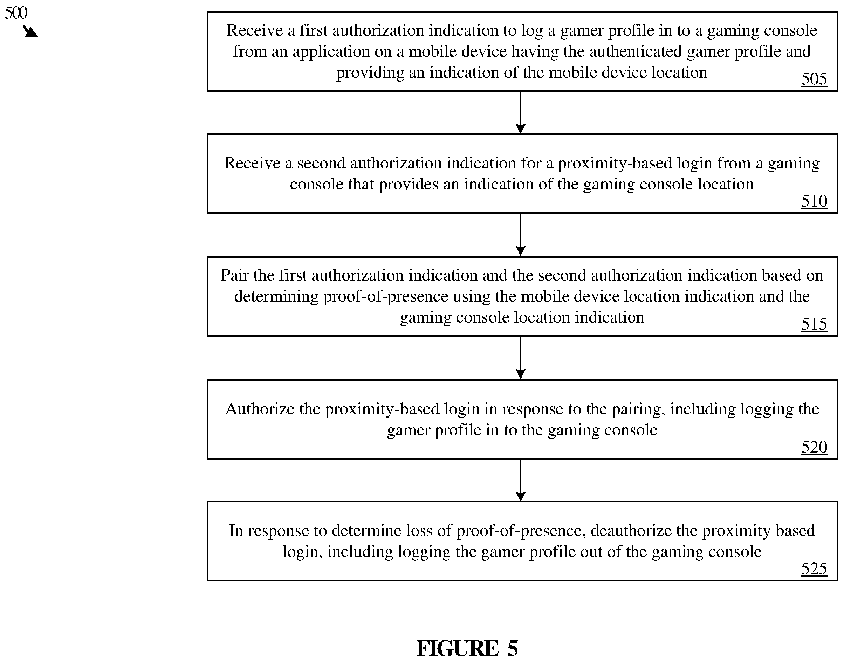

**FIG. 5** illustrates a method 500 of proximity-based login and logout. Method 500 may be performed by a central service (e.g., central service 130). While specific steps are described, more or fewer steps may be performed in or with method 500, and the steps of method 500 may be performed in different orders. At step 505, the central service receives a first authorization indication to log a gamer profile in to a gaming console from an application on a mobile device having the authenticated gamer profile and providing an indication of the physical location of the mobile device location. For example, the user may be logged into gaming app 112 with profile 114 which is authenticated by central service 130. The user may request a proximity-based login on console 120 using gaming app 112 by clicking access console button 116. Central service 130 receives the request along with an indication of the location of mobile device 110. The indication of the location may include actual location information (e.g., GPS coordinates) or location evidence indicating proximity to other devices. For example, a wireless scan signature, a QR code, a scan signature of other IoT devices, the wireless network onto which the mobile device is logged in, or any other indication of the mobile device location may be included in the request.

At step 510, the central service receives a second authorization indication for a proximity-based login from a gaming console that provides an indication of the gaming console location. For example, the user may request a proximity-based login on console 120. Console 120 may send the request along with an indication of the location of console 120 (i.e., location evidence). For example, console 120 may include a wireless scan signature, a QR code, a GPS location, a scan signature of other IoT devices, a wireless network onto which console 120 is logged in, or any other indication of the console location. In some embodiments, console 120 may send the second authorization indication based on a request from central service 130. For example, once the central service receives the request at step 505, which may include the identifier of the console, the central service may send the request for the authorization to the console.

At step 515, the central service pairs the first authorization indication and the second authorization indication based on determining proof-of-presence using the mobile device location indication and the gaming console location indication. For example, central service may pair the indications based on the mobile device location indication and the gaming console location indication or any other identifier that allows central service to correlate the mobile device and the console. Once correlated, the central service may perform the proof-of-presence determination and validate that the mobile device is co-located with the console based on the location information provided by each. The proof-of-presence may be established by the central service comparing the location evidence of the mobile device to the location evidence of the console. For example, if both are logged into the same wireless network, that may indicate sufficient proximity. As another example, both may provide wireless scan signatures listing the same wireless access point names and similar signal strengths. The amount of variation may be configured by setting a threshold value for the percent or portion of match needed to validate proof-of-presence. Any locational evidence may be used that may indicate proximity of the mobile device to the console. Difficult to spoof location evidence is preferred, or multiple types of location evidence may be used, to help ensure the mobile device is truly physically near the console. Based on validating the proof-of-presence, the central service may officially pair the indications, correlating the mobile device and the console.

At step 520, the central service authorizes the proximity-based login based on the validation of the proof-of-presence. Once the proximity-based login is authorized, the central service logs the profile in to the console.

At step 525, the central service may determine a loss of proof- of-presence and deauthorize the proximity-based login. Deauthorizing the proximity-based login includes logging the profile out of the console. Deauthorizing may further include deleting all data associated with the profile from the console, in some embodiments. Determining the loss of the proof-of-presence may be based on periodic polling or a triggering event.

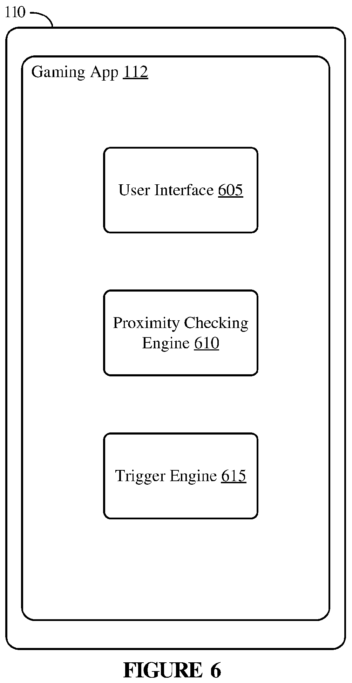

**FIG. 6** additional detail of functionality provided by gaming app 112 executing on mobile device 110. Gaming app 112 may include user interface 605, proximity checking engine 610, and trigger engine 615. While shown with specific engines and modules, gaming app 112 may implement the described functionality with more or fewer modules and engines without departing from the scope and spirit of the present disclosure.

User interface 605 provides graphical user interface functionality to the user to interact with central service 130, log in with profile 114, and so forth. User interface 605 may provide any graphical user interface functionality typical to a gaming application on a mobile device. Further, user interface 605 may provide access console button 116 or any relevant equivalent for allowing the user to initiate the proximity-based login process.

Proximity checking engine 610 may interface with hardware and other componentry of mobile device 110 for generating and providing location evidence to central service 130. For example, if the type of location evidence is a QR code, proximity checking engine 610 may use the camera to scan the QR code, extract relevant information, and transmit the relevant information or the QR code to central service 130. As another example, if the type of location evidence is a wireless scan signature, proximity checking engine 610 may use the wireless communication interface of mobile device 110 to scan for available wireless networks. Proximity checking engine 610 may use the data from the scan to generate the wireless scan signature, including the names and signal strengths of the available wireless networks. As yet another example, if the type of location evidence is a scan signature of other IoT devices, proximity checking engine 610 may use the wireless communication interface of mobile device 110 to scan for available or detectable IoT signals. Proximity checking engine 610 may use the data from the scan to generate the scan signature, including the names and signal strengths of the available IoT devices. As yet another example, if the type of location evidence is a GPS location, proximity checking engine 610 may use the GPS component of mobile device 110 to obtain GPS coordinates, for example. As yet another example, if the type of location evidence is connection to a wireless network matching the wireless network the console is connected to, proximity checking engine 610 may request the network connection information from the network interface components of mobile device 110. In some embodiments, proximity checking engine 610 may provide the location evidence requested by central service 130. In some embodiments, the initial location evidence supplied with the request to proximity-based login on console 120 may be a different type of location evidence than that provided for subsequent proof-of-validation determinations.

Trigger engine 615 may be configured to monitor movement of mobile device 110 when it is being used as the proximity checking point for a proximity-based login. For example, when profile 114 is logged in to console 120 based on a proximity-based login of profile 114 using the authentication of profile 114 on mobile device 110 via gaming app 112, trigger engine 615 may actively monitor the location or movement of mobile device 110. For example, mobile device 110 may include motion sensors that trigger engine 615 may monitor such that signals indicating movement may cause trigger engine 615 to send a notice to central service 130 to perform a proof-of-presence determination. Trigger engine 615 may also force a notice based on the user logging profile 114 out of gaming app 112. For example, before completing the logout, trigger engine 615 may transmit the notification. When central service 130 requests the location, mobile device 110 may not respond since profile 114 will be logged out. Accordingly, proof-of-presence will be lost, and central service 130 will deauthorize profile 114 on console 120, forcing a logout of profile 114 from console 120.

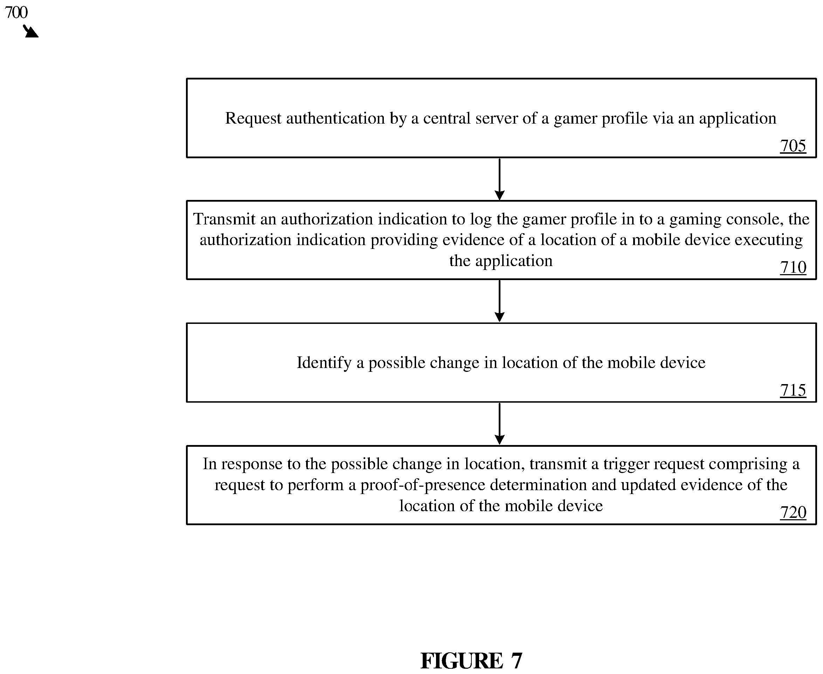

**FIG. 7** illustrates a method 700 of proximity-based login and logout. Method 700 may be performed by a mobile device (e.g., mobile device 110). While specific steps are described, more or fewer steps may be performed in or with method 700, and the steps of method 700 may be performed in different orders. At step 705, the mobile device requests authentication of a gamer profile via an application from a central service. For example, mobile device 110 requests authentication of profile 114 via gaming app 112 from central service 130. The request allows the central service to authenticate the profile using complete credentials such as a username and password.

At step 710, the mobile device transmits an authorization indication to log the gamer profile in to a gaming console, the authorization indication providing evidence of a location of a mobile device executing the application. For example, the user may select the access console button 116 in gaming app 112 to indicate that the user wants to log profile 114 in to console 120. Upon submission of the request, mobile device 110 obtains location evidence and provides the location evidence with the request. The type of location evidence obtained and provided may be configured in gaming app 112 in some embodiments. In some embodiments, the user may select the location evidence by selecting a particular setting or button for submission of the request.

At step 715, the mobile device identifies a possible change in location. For example, motion sensors may indicate movement of the mobile device. In other embodiments, changes in GPS location may be used to identify the possible change in location. Any suitable monitoring method may be used to identify the possible change in location.

At step 720, in response to the possible change in location, the mobile device transmits a trigger request including a request to perform a proof-of-presence determination to the central service. In some embodiments, the request includes updated evidence of the location of the mobile device. In some embodiments, upon receiving the trigger request, the central service will request updated location evidence from the mobile device, at which point the mobile device will send the updated location evidence.

Based on whether the proof-of-presence validation succeeds or not (i.e., whether proof-of-presence is confirmed or lost), the central service may deauthorize the proximity-based login. Deauthorizing the proximity-based login includes logging the profile off the console.

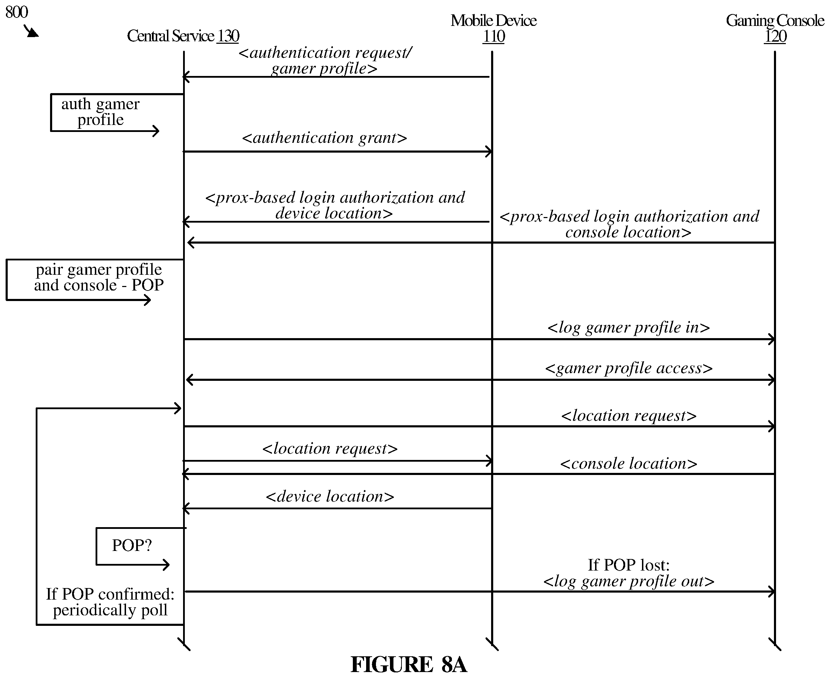

**FIG. 8A** illustrates an operational scenario 800 of method 500 using periodic polling to perform periodic proof-of-presence determinations. Operational scenario 800 includes central service 130, mobile device 110, and console 120. Mobile device 110 sends an authentication request for the gamer profile to central service 130. For example, the user logs in to gaming app 112 with profile 114. Central server performs the authentication. Assuming the provided credentials (e.g., username and password) are correct, central service completes the authentication and transmits an authentication grant to mobile device 110. Mobile device 110 transmits a proximity-based login authorization and device location to central service 130. Meanwhile, gaming console 120 transmits a proximity-based login authorization or request and console location to central service 130. Upon receiving the requests or authorizations for proximity-based login from console 120 and mobile device 110, central service 130 pairs gamer profile 114 and mobile device 110 with console 120. Pairing includes validating the proof-of-presence and, based on validating, authorizing the proximity-based login. Based on authorizing the proximity-based login, central service 130 sends instructions to log profile 114 in on console 120. Accordingly, gaming console 120 accesses data associated with profile 114.

Central service 130 may be configured to periodically poll mobile device 110 and console 120 for updated location evidence. In response, mobile device 110 and console 120 provide uploaded location evidence. In some embodiments, the type of location evidence requested and provided in the periodic polling may be different than the type of location evidence provided with the initial proximity-based login authorization. Central service 130 uses the updated location evidence to validate point-of-presence (POP) or determine POP is lost. If point-of-presence is lost, central service 130 logs profile 114 out of console 120. However, if point-of-presence is confirmed, the period for polling is used to wait and send another request for updated location information.

In some embodiments, rather than central service 130 requesting updated location evidence, console 120 and mobile device 110 may be configured to execute timers to periodically send updated location evidence to central service 130 without first being requested.

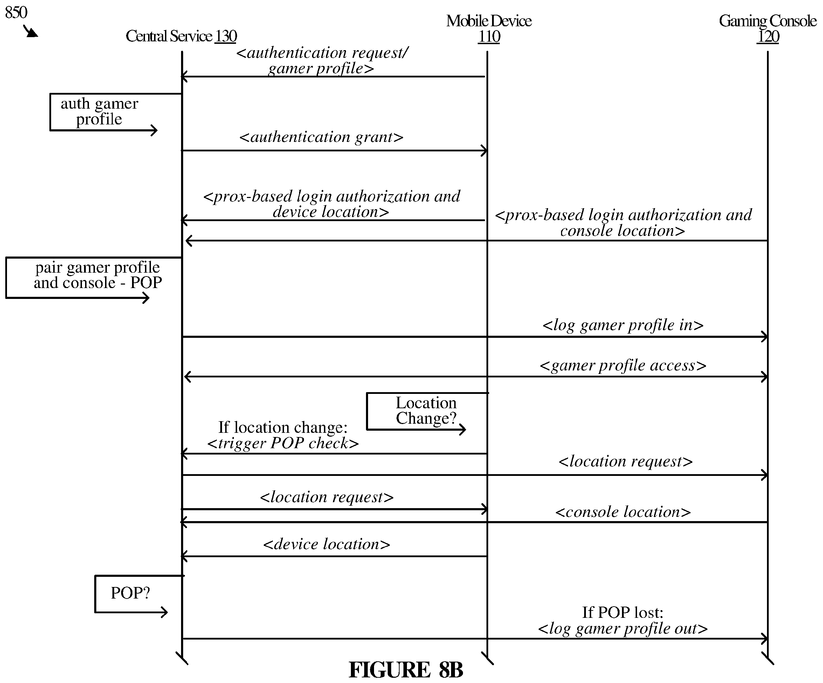

**FIG. 8B** illustrates an operational scenario 850 of methods 500 and 700 using triggering events to perform subsequent proof-of-presence determinations. Operational scenario 850 includes central service 130, mobile device 110, and console 120. Mobile device 110 sends an authentication request for the gamer profile 114 to central service 130. For example, the user logs in to gaming app 112 with profile 114. Central server 130 performs the authentication. Assuming the provided credentials (e.g., username and password) are correct, central service 130 completes the authentication and transmits an authentication grant to mobile device 110. Mobile device 110 transmits a proximity-based login authorization and device location to central service 130. Meanwhile, gaming console 120 transmits a proximity-based login authorization or request and console location to central service 130. Upon receiving the requests or authorizations for proximity-based login from console 120 and mobile device 110, central service 130 pairs gamer profile 114 and mobile device 110 with console 120. Pairing includes validating the proof-of-presence and, based on validating, authorizing the proximity-based login. Based on authorizing the proximity-based login, central service 130 sends instructions to log profile 114 in on console 120. Accordingly, gaming console 120 accesses data associated with profile 114.

After console 120 operates and accesses data associated with profile 114, mobile device 110 may identify a possible location change. For example, gaming app 112 may monitor GPS coordinates, motion sensors, or the like to identify possible location changes. Upon detecting a possible location change, mobile device 110 triggers a POP determination. For example, mobile device 110 may send a notice or instructions to central service 130 to perform a point-of-presence determination based on the possible location change. In response to the notice, central service 130 may request updated location evidence from mobile device 110 and console 120. Both mobile device 110 and console 120 should respond with updated location evidence. If one or both fail to respond, the point-of-presence determination fails. If the updated location evidence no longer matches, the point-of-presence determination fails (i.e., point-of-presence is lost). When point-of-presence is lost, central service 130 logs profile 114 out of console 120. Otherwise, for example if the mobile device did not move sufficiently far to lose point-of-presence, the proximity-based login is maintained.

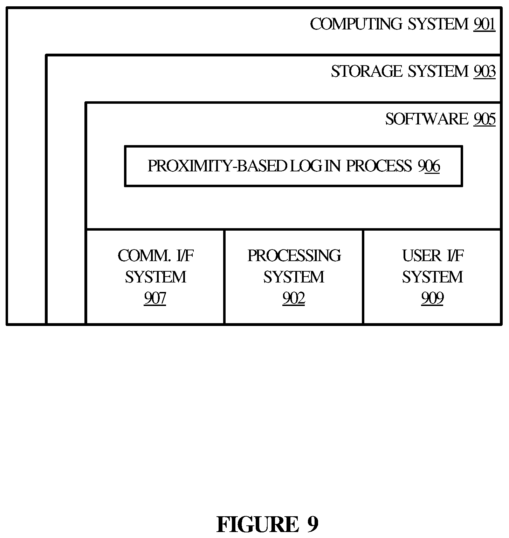

**FIG. 9** illustrates computing device 901 that is representative of any system or collection of systems in which the various processes, programs, services, and scenarios disclosed herein may be implemented. Examples of computing device 901 include, but are not limited to, desktop and laptop computers, tablet computers, mobile computers, and wearable devices. Examples may also include server computers, web servers, cloud computing platforms, and data center equipment, as well as any other type of physical or virtual server machine, container, and any variation or combination thereof. Accordingly, mobile device 110 may be computing device 901. Further, servers executing instructions that support cloud-hosted services including central service 130 may be computing device 901.

Computing device 901 may be implemented as a single apparatus, system, or device or may be implemented in a distributed manner as multiple apparatuses, systems, or devices. Computing device 901 includes, but is not limited to, processing system 902, storage system 903, software 905, communication interface system 907, and user interface system 909 (optional). Processing system 902 is operatively coupled with storage system 903, communication interface system 907, and user interface system 909.

Processing system 902 loads and executes software 905 from storage system 903. Software 905 includes and implements proximity-based log in process 906, which is (are) representative of the proximity-based log in and log out processes and the proof-of-presence determination processes discussed with respect to the preceding figures, such as process 200. When executed by processing system 902, software 905 directs processing system 902 to operate as described herein for at least the various processes, operational scenarios, and sequences discussed in the foregoing implementations. Computing device 901 may optionally include additional devices, features, or functionality not discussed for purposes of brevity.

Referring still to FIG. 9, processing system 902 may comprise a microprocessor and other circuitry that retrieves and executes software 905 from storage system 903. Processing system 902 may be implemented within a single processing device but may also be distributed across multiple processing devices or sub-systems that cooperate in executing program instructions. Examples of processing system 902 include general purpose central processing units, graphical processing units, application specific processors, and logic devices, as well as any other type of processing device, combinations, or variations thereof.

Storage system 903 may comprise any computer readable storage media readable by processing system 902 and capable of storing software 905. Storage system 903 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 903 may also include computer readable communication media over which at least some of software 905 may be communicated internally or externally. Storage system 903 may be implemented as a single storage device but may also be implemented across multiple storage devices or sub-systems co-located or distributed relative to each other. Storage system 903 may comprise additional elements, such as a controller, capable of communicating with processing system 902 or possibly other systems.

Software 905 (including proximity-based log in process 906) may be implemented in program instructions and among other functions may, when executed by processing system 902, direct processing system 902 to operate as described with respect to the various operational scenarios, sequences, and processes illustrated herein. For example, software 905 may include program instructions for implementing a proximity-based log in and log out process, a proof-of-presence determination process, and the like, as described herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 905 may include additional processes, programs, or components, such as operating system software, virtualization software, or other application software. Software 905 may also comprise firmware or some other form of machine-readable processing instructions executable by processing system 902.

In general, software 905 may, when loaded in to processing system 902 and executed, transform a suitable apparatus, system, or device (of which computing device 901 is representative) overall from a general-purpose computing system into a special-purpose computing system customized to support proximity-based log in and log out in an optimized manner. Indeed, encoding software 905 on storage system 903 may transform the physical structure of storage system 903. The specific transformation of the physical structure may depend on various factors in different implementations of this description. Examples of such factors may include, but are not limited to, the technology used to implement the storage media of storage system 903 and whether the computer-storage media are characterized as primary or secondary storage, as well as other factors.

For example, if the computer readable storage media are implemented as semiconductor-based memory, software 905 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 907 may include communication connections and devices that allow for communication with other computing systems (not shown) over communication networks (not shown). Examples of connections and devices that together allow for inter-system communication may include network interface cards, antennas, power amplifiers, RF circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between computing device 901 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof. The aforementioned communication networks and protocols are well known and need not be discussed at length here.

As will be appreciated by one skilled in the art, aspects of the present invention may be embodied as a system, method, or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Indeed, the included descriptions and figures depict specific embodiments to teach those skilled in the art how to make and use the best mode. For the purpose of teaching inventive principles, some conventional aspects have been simplified or omitted. Those skilled in the art will appreciate variations from these embodiments that fall within the scope of the disclosure. Those skilled in the art will also appreciate that the features described above may be combined in various ways to form multiple embodiments. As a result, the invention is not limited to the specific embodiments described above, but only by the claims and their equivalents.

Alternatively, or in addition to the other examples described herein, examples include any combination of the following:
Clause A: A computer-implemented method, comprising: receiving, by a central service via an application on a mobile computing device, a first authorization indication to log a gamer profile in to a gaming console, wherein: the gamer profile is logged in to the application and authenticated by the central service, and the first authorization indication includes a first location indication of a physical location of the mobile computing device; receiving, by the central service from the gaming console, a second authorization indication for a proximity-based login, wherein the second authorization indication includes a second location indication of a physical location of the gaming console; pairing, by the central service, the first authorization indication and the second authorization indication in response to determining proof-of-presence of the mobile computing device and the gaming console based on the first location indication and the second location indication exceeding a pairing threshold; in response to the pairing, authorizing the proximity-based login, wherein the authorizing comprises: logging, by the central service, the gamer profile in to the gaming console; and in response to determining loss of the proof-of-presence, deauthorizing the proximity-based login, wherein the deauthorizing comprises: logging, by the central service, the gamer profile out of the gaming console.
Clause B: The computer-implemented method of clause A, further comprising: receiving, by the central service from the mobile computing device and the gaming console, continued respective location indications; and wherein the determining the loss of the proof-of-presence comprises: determining the continued respective location indications fall below a matching threshold.
Clause C: The computer-implemented method of clause B, wherein the continued respective location indications comprise a different type of location indication than the first and second location indications.
Clause D: The computer-implemented method of clause B, further comprising:
   periodically polling, by the central service, the mobile computing device and the gaming console, for the continued respective location indications, wherein the continued respective location indications are received in response to the periodic polling.
Clause E: The computer-implemented method of clause B, further comprising: receiving, by the central service from the mobile computing device, a change indication of a possible change in location of the mobile computing device; and in response to the change indication, requesting, by the central service, the continued respective location indications from the mobile computing device and the gaming console, wherein the continued respective location indications are received in response to the request.
Clause F: The computer-implemented method of clause A, wherein the authorizing further comprises: providing, by the central service to the gaming console, access to limited data associated with the gamer profile based on the proximity-based login.
Clause G: The computer-implemented method of clause A, wherein: the first location indication includes a first wireless scan signature comprising names and signal strengths of wireless access points available to the mobile computing device; and the second location indication includes a second wireless scan signature comprising names and signal strengths of wireless access points available to the gaming console.
Clause H: The computer-implemented method of clause A, wherein: the first location indication includes a first scan signature comprising names of one or more internet-of-things (IoT) devices emitting signals that are detected by the mobile computing device; and the second location indication includes a second scan signature comprising names of one or more IoT devices emitting signals that are detected by the gaming console.
Clause I: The computer-implemented method of clause A, wherein the first location indication and the second location indication each include an indication of a connection to a wireless network, a Quick-Response (QR) code, a sound signature, a Global Positioning System (GPS) location indication, or a combination thereof.
Clause J: The computer-implemented method of clause A, wherein the deauthorizing further comprises: transmitting, from the central service to the gaming console, instructions to delete all data related to the gamer profile associated with the proximity-based login.
Clause K: The computer-implemented method of clause A, wherein the central service receives the second authorization indication prior to receiving the first authorization indication.
Clause L: A system, comprising: a central service configured to at least: receive, via an application on a mobile computing device, a first authorization indication for a gaming console to access a gamer profile, wherein: the gamer profile is logged in to the application and authenticated by the central service, and the first authorization indication includes a first location indication of a physical location of the mobile computing device; receive, from the gaming console, a second authorization indication for a proximity-based login, wherein the second authorization indication includes a second location indication of a physical location of the gaming console; determine proof-of-presence of the mobile computing device and the gaming console based on the first location indication and the second location indication exceeding a pairing threshold; in response to the proof-of-presence, authorize the proximity-based login, wherein to authorize comprises: allow the gaming console to access data associated with the gamer profile; and in response to determining loss of the proof-of-presence, deauthorize the proximity-based login, wherein to deauthorize comprises: restrict the gaming console from accessing the data associated with the gamer profile.
Clause M: The system of clause L, wherein the central service is further configured to: receive, from the mobile computing device and the gaming console, continued respective location indications; and wherein to determine the loss of the proof-of-presence comprises: determine the continued respective location indications fall below a matching threshold.
Clause N: The system of clause M, wherein the continued respective location indications comprise a different type of location indication than the first and second location indications.
Clause O: The system of clause M, wherein the central service is further configured to: periodically poll the mobile computing device and the gaming console for the continued respective location indications, wherein the continued respective location indications are received in response to the periodic polling.
Clause P: The system of clause M, wherein the central service is further configured to: receive, from the mobile computing device, a change indication of a possible change in location of the mobile computing device; and in response to the change indication, request the continued respective location indications from the mobile computing device and the gaming console, wherein the continued respective location indications are received in response to the request.
Clause Q: The system of clause L, wherein to authorize further comprises:
   restrict access of the gaming console to limited data of the data associated with the gamer profile based on the proximity-based login.
Clause R: The system of clause L, wherein: the first location indication includes a first scan signature comprising names and signal strengths of wireless access points available to the mobile computing device, one or more internet-of-things (IoT) devices emitting signals that are detected by the mobile computing device, or a combination; and the second location indication includes a second scan signature comprising names and signal strengths of wireless access points available to the gaming console, one or more internet-of-things (IoT) devices emitting signals that are detected by the gaming console, or a combination.
Clause S: The system of clause L, wherein the first location indication and the second location indication each include an indication of a connection to a wireless network, a Quick-Response (QR) code, a sound signature, a Global Positioning System (GPS) location indication, or a combination thereof.
Clause T: The system of clause L, wherein to deauthorize further comprises: transmit, to the gaming console, instructions to delete all data related to the gamer profile associated with the proximity-based login.
Clause U: Technology is disclosed for expedited gamer profile log in to a gaming console based on a proof-of-presence of the owner of the gaming profile to the console. The user may request proximity-based login via a gaming application on a mobile device into which the user is logged in and authenticated by a central service. The mobile device sends the request to the central service along with location evidence. The user authorizes the proximity-based login on the console, which provides location evidence to the central service. The central service compares the mobile device location to the console location to pair the requests and authorizes the proximity-based login of the gamer profile on the console when the locations match. When mobile device location evidence no longer matches the console location evidence, the mobile device loses its proof-of-presence, and the central service automatically logs the gamer profile out of the console.

## Claims

1. A computer-implemented method, comprising:
receiving, by a central service via an application on a mobile computing device, a first authorization indication to log a gamer profile in to a gaming console,
wherein:
the gamer profile is logged in to the application and authenticated by the central service, and
the first authorization indication includes a first location indication of a physical location of the mobile computing device;
receiving, by the central service from the gaming console, a second authorization indication for a proximity-based login, wherein the second authorization indication includes a second location indication of a physical location of the gaming console;
pairing, by the central service, the first authorization indication and the second authorization indication in response to determining proof-of-presence of the mobile computing device and the gaming console based on the first location indication and the second location indication exceeding a pairing threshold;
in response to the pairing, authorizing the proximity-based login, wherein the authorizing comprises:
logging, by the central service, the gamer profile in to the gaming console; and in response to determining loss of the proof-of-presence, deauthorizing the proximity-based login, wherein the deauthorizing comprises:
logging, by the central service, the gamer profile out of the gaming console.

2. The computer-implemented method of claim 1, further comprising:
receiving, by the central service from the mobile computing device and the gaming console, continued respective location indications; and
wherein the determining the loss of the proof-of-presence comprises:
determining the continued respective location indications fall below a matching threshold.

3. The computer-implemented method of claim 2, wherein the continued respective location indications comprise a different type of location indication than the first and second location indications.

4. The computer-implemented method of claim 2, further comprising:
periodically polling, by the central service, the mobile computing device and the gaming console, for the continued respective location indications, wherein the continued respective location indications are received in response to the periodic polling.

5. The computer-implemented method of claim 2, further comprising:
receiving, by the central service from the mobile computing device, a change indication of a possible change in location of the mobile computing device; and
in response to the change indication, requesting, by the central service, the continued respective location indications from the mobile computing device and the gaming console, wherein the continued respective location indications are received in response to the request.

6. The computer-implemented method of claim 1, wherein the authorizing further comprises:
providing, by the central service to the gaming console, access to limited data associated with the gamer profile based on the proximity-based login.

7. The computer-implemented method of claim 1, wherein:
the first location indication includes a first wireless scan signature comprising names and signal strengths of wireless access points available to the mobile computing device; and
the second location indication includes a second wireless scan signature comprising names and signal strengths of wireless access points available to the gaming console.

8. The computer-implemented method of claim 1, wherein:
the first location indication includes a first scan signature comprising names of one or more internet-of-things (IoT) devices emitting signals that are detected by the mobile computing device; and
the second location indication includes a second scan signature comprising names of one or more IoT devices emitting signals that are detected by the gaming console.

9. The computer-implemented method of claim 1, wherein the first location indication and the second location indication each include an indication of a connection to a wireless network, a Quick-Response (QR) code, a sound signature, a Global Positioning System (GPS) location indication, or a combination thereof.

10. The computer-implemented method of claim 1, wherein the deauthorizing further comprises:
transmitting, from the central service to the gaming console, instructions to delete all data related to the gamer profile associated with the proximity-based login.

11. The computer-implemented method of claim 1, wherein the central service receives the second authorization indication prior to receiving the first authorization indication.

12. A system, comprising:
a central service configured to at least:
receive, via an application on a mobile computing device, a first authorization indication for a gaming console to access a gamer profile, wherein:
the gamer profile is logged in to the application and authenticated by the central service, and
the first authorization indication includes a first location indication of a physical location of the mobile computing device;
receive, from the gaming console, a second authorization indication for a proximity-based login, wherein the second authorization indication includes a second location indication of a physical location of the gaming console;
determine proof-of-presence of the mobile computing device and the gaming console based on the first location indication and the second location indication exceeding a pairing threshold;
in response to the proof-of-presence, authorize the proximity-based login, wherein to authorize comprises:
allow the gaming console to access data associated with the gamer profile; and
in response to determining loss of the proof-of-presence, deauthorize the proximity-based login, wherein to deauthorize comprises:
restrict the gaming console from accessing the data associated with the gamer profile.

13. The system of claim 12, wherein the central service is further configured to:
periodically poll the mobile computing device and the gaming console for the continued respective location indications;
receive, from the mobile computing device and the gaming console in response to the periodic polling, continued respective location indications; and
wherein to determine the loss of the proof-of-presence comprises:
determine the continued respective location indications fall below a matching threshold.

14. The system of claim 12, wherein the central service is further configured to:
receive, from the mobile computing device, a change indication of a possible change in location of the mobile computing device;
in response to the change indication, request continued respective location indications from the mobile computing device and the gaming console;
receive, from the mobile computing device and the gaming console in response to the request, the continued respective location indications; and
wherein to determine the loss of the proof-of-presence comprises:
determine the continued respective location indications fall below a matching threshold.

15. The system of claim 12, wherein to deauthorize further comprises:
transmit, to the gaming console, instructions to delete all data related to the gamer profile associated with the proximity-based login.
